# EUROPEAN PATENT SPECIFICATION

(11) **EP 0 513 219 B1**
(45) Date of publication and mention of the grant of the patent: **03.04.1996**
(21) Application number: 91904625.0
(22) Date of filing: 31.01.1991
(51) Int. Cl.: G01N 33/543, B03C 1/035, B03C 1/28

(54) **FLEXIBLE BAG ASSEMBLY FOR MAGNETIC SEPARATOR**
FLEXIBLE BEHÄLTER FÜR MAGNETSCHEIDER-EINRICHTUNG
SAC SOUPLE POUR SEPARATEUR MAGNETIQUE

(30) Priority: 31.01.1990 US 473077
(43) Date of publication of application: 19.11.1992
(73) Proprietor: BAXTER INTERNATIONAL INC., Deerfield, IL 60015 (US)
(72) Inventor: HARDWICK, R., Alan, El Toro, CA 92630 (US); JOHNSON, Kenneth M., Lake Zurich, IL 60047 (US); LYNN, Daniel, R., Lake Villia, IL 60046 (US)
(74) Representative: MacGregor, Gordon
(86) International application number: US9100664
(87) International publication number: WO9111716

(56) References cited:
- WO-A-90/04019
- US-A- 4 710 472
- BRITISH JOURNAL OF CANCER, vol. 54, 1986, Macmillan, London (GB); J.T. KEMSHEAD et al., pp. 771-778/

## Description

### BACKGROUND OF THE INVENTION

The present invention is directed toward a flexible container assembly useful for medical applications, and in particular, a flexible tube set having at least a first flexible container used in the selective magnetic particle separation of specific biologics from a heterogeneous mixture.

Magnetic separation of specific biologics from a heterogeneous mixture involves bringing the heterogeneous mixture into contact with paramagnetic particles that bear biologically active compounds which selectively react to bind the specific biologics to the particles. Typically, the biologically active compounds are antibodies, i.e. monoclonal or polyclonal antibodies, which selectively bind to specific biologics, i.e. cells, virus, bacteria, antigens or other antibodies.

The container in which the heterogeneous mixture and magnetic particle are admixed is placed within a magnetic field. This magnetic field retains the particles within the container while the remainder of the heterogeneous mixture is removed.

A more detailed explanation of magnetic separation as used in medical applications can be found in United States Patent Nos. 3,970,518, and 4,018,886, both of which issued to Giaever, 4,219,411, issued to Yen et al, and 4,710,472, issued to Sauer et al. Many different devices have been proposed to carry out this magnetic separation. Examples of such devices are disclosed in these various patent references.

A disadvantage with many such devices is the inadequate retrieval of the paramagnetic particles from the heterogeneous mixture caused by the inadequate capture of the particles in the applied magnetic field. Those particles not held within the magnetic field are free to be carried off with the heterogeneous mixture. This is particularly disadvantageous where the heterogeneous mixture will be returned to the patient.

Various devices have been suggested to overcome this deficiency; for example, the device disclosed in the Saur et al patent. This device allows for the movement of the magnets with respect to the container which increases the exposure of the particles to the effects of the magnetic field. Another device which has been developed to overcome this deficiency is disclosed in WO 90/04019. This magnetic separator utilizes two different types of magnets for entrapping the paramagnetic particles. The first magnet to which the mixed heterogeneous mixture and paramagnetic particles are exposed possesses a relatively large magnetic field reach. This provides a greater penetration of the container volume. The sacrifice is that the resulting magnetic field strength is lessened. A second magnet is positioned downstream from this first magnet which possesses a smaller magnetic field reach but a higher field strength. The second magnet acts upon all those paramagnetic particles which escape the first magnet. The arrangement of the magnets increases the capture of the paramagnetic particles.

While the magnetic separators disclosed in the discussed patent applications promote efficient capture of substantially all of the paramagnetic particles, it would be beneficial to increase this potential and thus limit the possibility of any of the particles being carried along with the heterogeneous mixture.

A potential improvement for such an approach would be to design the flexible container in which the mixture is held to promote the attraction of the magnetic field. While the flexible container arrangement disclosed in the described application is adequate for the purposes of the invention, it would be beneficial if a flexible container arrangement could be provided which assisted the magnetic separator described in the related patent application or other types of magnetic separators in the separation of paramagnetic particles from heterogeneous mixtures.

### SUMMARY OF THE INVENTION

The present invention is directed at a flexible container arrangement useful for performing the magnetic separation of paramagnetic particles from a heterogeneous biological mixture. In particular, the flexible container arrangement of the invention includes two or more flexible containers having inlet and outlet ports, with at least one outlet port of a first container being connected by a fluid pathway to an inlet port of a second container.

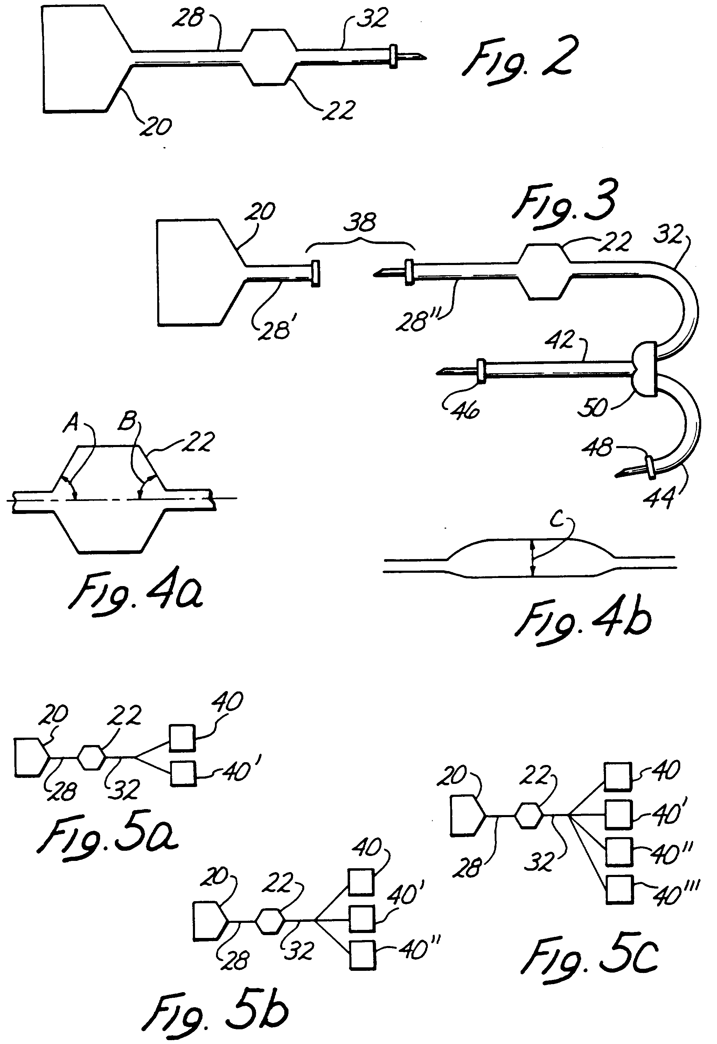

The first container is dimensioned to hold a large volume of a heterogeneous mixture and paramagnetic particles, with the cross- sectional area being from about 129cm (20in) to about 322,6cm (50in). The depth of the first flexible container ranges from about 0,635cm (1/4 inch) to about 1,27cm (1/2 inch). It should be noted that "depth" for the purposes of this application, is the distance of the cross-section of the container as seen as "C" in Figure 4B, which is the height of the fluid flow path through the container over the magnet. This flexible container is designed to be arranged over a magnet assembly having a relatively large field reach.

The second container is designed to be arranged over a magnet assembly having a relatively small field reach. This is accomplished by providing that the depth of the container is relatively small in comparison to that of the first container. Further, the second container is designed to limit the flow rate of the fluid from the inlet to the outlet, and also to ensure that the fluid flow is substantially laminar and orderly while minimizing stagnant flow area in the container. This enhances the capture of the paramagnetic particles passing through the container.

The flexible container assembly also preferentially includes one or more flexible containers which are connected to the second container for receiving fluid therefrom by multiple fluid pathways.

### BRIEF DESCRIPTION OF THE DRAWINGS

The present invention may be better understood and the advantages will become apparent to those skilled in the art by reference to the accompanying drawings, wherein like reference numerals refer to like elements in the several figures, and wherein:
FIGURE 1 is a prospective illustration of the flexible container assembly of the invention in position on a magnetic separator device;
FIGURE 2 is a top view of an integrally formed container assembly including the first and second containers;
FIGURE 3 is a top view of another embodiment of the invention in which the first and second containers are coupled together by interconnecting tubes;
FIGURES 4A-B are top and side views of the second flexible container of the invention; and
FIGURES 5A-C are top views of different embodiments of the invention showing multiple configurations of receiving containers connected to the second flexible container.

### DESCRIPTION OF THE PREFERRED EMBODIMENTS

The present invention is directed to a flexible container assembly useful for medical applications. The flexible container assembly of the invention has particular applicability in the area of magnetic separation. Magnetic separation is the technique used to isolate specific biological substances from a heterogeneous mixture. Typically this type of technique is used to isolate specific cells, viruses, bacteria or antibodies from a bodily fluid, e.g. blood.

Magnetic separation utilizes paramagnetic particles, such as those manufactured by the Dynal Company of Great Neck, New York. The surface of the paramagnetic particles is chemically treated to attach or bind a biologically active compound. The biologically active compound functions to react with and bind to the specific biologics. Typically, the biologically active compound is an antibody, i.e. a monoclonal or polyclonal antibody for the specific biologic.

The heterogeneous mixture is admixed with the paramagnetic particles in a container. After the expiration of a sufficient amount of time to ensure the reaction between the biologically active compound and the specific biologic, a magnetic field is introduced into the container. This is usually accomplished by placing the container adjacent to a magnet. The paramagnetic particles are thus drawn towards the magnetic field and held along a wall of the container. The remainder of the heterogeneous mixture is then removed from the container leaving the paramagnetic particles and the specific biologic therein.

As described above, investigators have proposed numerous designs for the magnetic separator which increases the exposure of the particles to the magnetic field, thus increasing the probability of capturing the paramagnetic particles. The present invention is directed at a container design which maximizes the magnetic attractive force on the particles.

This is accomplished by designing the container to include at least two separate but aseptically connected flexible containers. The first container is designed to provide sufficient volume to contain the mixture of the heterogeneous mixture and paramagnetic particles. Usually, the admixing of the heterogeneous mixture and paramagnetic particles will be performed in this first container. The first container is positioned adjacent a first magnet or portion of a first magnet, which magnet possesses a large field reach.

A substantial majority of the particles in the first container are drawn down to the magnet and held against the container wall. The remaining mixture is then drawn out of the first bag and delivered to a second container through an aseptically sealed fluid pathway. As the mixture flows out of the first bag, some paramagnetic particles also leave and flow out of the first bag.

The second container is designed to promote two functions. The first function is to reduce the distance between any fugitive paramagnetic particles which escaped the first magnet and the surface of the second magnet. The second function is to reduce the velocity of the fluid traversing the container. These two functions cooperate to ensure a maximum exposure of the paramagnetic particles to a magnetic field. In this regard, the second container is positioned adjacent a magnet. This magnet may be the same as that against which the first container is positioned, or another type of magnet.

In accordance with a preferred embodiment, the second container is designed to cooperate and enhance the effect of that magnet over which it is positioned. This magnet possesses a magnetic reach relatively less than the first magnet, but has a greater field strength along this reach.

Either way, the limiting of the depth of the fluid pathway flowing through the second container increases the exposure of the paramagnetic particles to the magnetic field. Further, the design of the second container to limit or lower the fluid velocity increases the residual time that the paramagnetic particles are being exposed to the magnetic field. This further enhances the capture of a substantial portion of the paramagnetic particles.

While the flexible container assembly of the invention may be used with various magnetic separator devices, it will be described with specific relation to the magnetic separator described and claimed in WO 90/04019 . Accordingly, the entire disclosure of the magnetic separator and description of the flexible collapsible containers is incorporated herein by reference.

It should be noted that a flexible container assembly is described in general terms in these two applications. The flexible container assembly of this invention is an improvement over this generally taught assembly. Accordingly, those specific descriptions of the flexible container made in these two applications are specifically incorporated herein by way of reference.

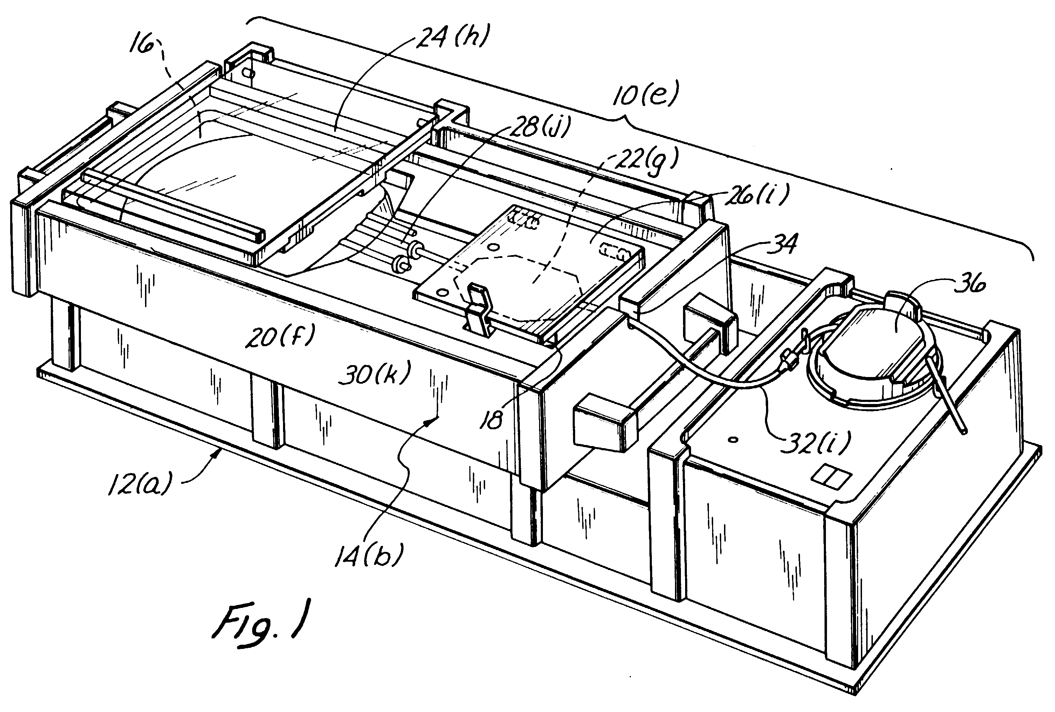

Referring to Figure 1, a prospective view of a magnetic separator device, as described in the above incorporated to patent application, is seen generally at 10. Magnetic separator 10 includes a lower base member 12 atop which sits upper base member 14. Formed in the upper base member 14 are two receptacles 16 and 18. The receptacles 16 and 18 are generally rectangularly shaped with four circumference sides and a bottom. The top portion of each receptacle 16 and 18 is defined by hinged plates 24 and 26. A magnet assembly, not seen, is positioned in or on the bottom of each receptacle 16 and 18. A more thorough description of the magnetic assemblies can be found in the above referenced patent application WO 90/04019.

Each receptacle 16 and 18 is designed to receive a flexible container or bag, seen generally at 20 and 22. The flexible containers 20 and 22 comprise the flexible container assembly of the invention. Generally, the two containers 20 and 22 are connected by a flexible tubing, seen at 28. The flexible tubing 28 lays within a channel 30 interconnecting the receptacles 16 and 18. The flexible containers 20 and 22 include one or more inlet and outlet ports, not shown. An outlet port of flexible container 20 is connected to the inlet port of the flexible container 22 via the flexible tubing 28 to provide a fluid pathway between the two flexible containers 20 and 22.

The flexible container 22 also includes an outlet port from which extends another flexible tubing 32. This flexible tubing 32 fits within a slot 34 formed in the upper base member 14. The flexible tubing 32 is positioned in a roller pump assembly 36, and is used to draw out fluid held in the flexible container 20, through the flexible container 22 and out of the flexible container assembly through the flexible tubing 32.

While not seen in Figure 1, a plurality of receiving containers may be connected to the flexible tubing 32 to receive the fluid exiting the flexible container assembly. The flexible container assembly may be a single integral piece or be formed from one or more detachable subassemblies. In one embodiment, as seen in Figure 2, the individual flexible containers 20 and 22 are connected by a single piece of tubing 28. In another embodiment, as seen in Figure 3, the single piece of tubing 28 is divided into two segments 28' and 28", which are coupled together via a spike and slip assembly, seen generally at 38.

As stated, the outlet of flexible container 22 may be connected to one or more receiving containers. As seen in Figures 5A-C, the outlet of flexible container 22 may be connected to two receiving bags 40 and 40' (Fig. 5A); three receiving bags 40, 40' and 40" (Fig, 5B); or four receiving bags 40, 40', 40" or 40"' (Fig. 5C). This connection is performed by providing the flexible tubing 32, which extends out from the outlet port of flexible container 22, with one or more shunts, seen at 42 and 44. These shunts 42 and 44 are connected to the flexible tubing 32 by a Y-connector 50. The opposite ends of each shunt 42 and 44 are provided with spikes 46 and 48 respectively, for connecting to the individual receiving bags 40. As would be apparent to those skilled in the art, additional shunts may be connected to the end of flexible tubing 32 to allow for the connection to additional receiving bags 40.

Referring now to Figures 4A and 4B, the second flexible container 22 will be described in greater detail. This second flexible container 22 is designed to reduce the depth of the fluid pathway and the velocity of the fluid flowing across the second magnet of the separator 10. The reduction of the fluid pathway depth is described generally in WO 90/04019 as being between 0,5 and 2,54 mm (0.02 and 0.1 inch). A more preferred depth is from about 0,5 to about 1mm (0.02 in to about 0.04 inch), and still more preferably 0,076 mm (0.03 inch). These more preferred depths have been found to greatly increase the capture rate of the magnet particles.

The reduction of the fluid velocity through the pathway, or second container, is controlled by designing the cross-sectional area of the flexible tubing 32 with a defined fraction of the cross-sectional diameter of the flexible container 22. This fraction is typically from about 3,6 to about 8,5 mm (1/7 to about 1/3 inch), preferentially about 5mm (1/5 inch). The result is that the fluid will flow through the flexible container 22 at this defined fraction of the velocity through the flexible tubing 32.

It is also critical to ensure that the fluid flows uniformly through the flexible container 22. This is accomplished by providing that the flexible container 22 adjacent to the inlet diverge away therefrom, with that portion adjacent to the outlet converging towards the outlet. In particular, the walls defining the flexible container 22 adjacent the inlet and outlet should be at an angle of from about 35° to about 43° to the centerline of the inlet and outlet, preferably 39°, which angles are seen in Figure 4A at "A" and "B", respectively. This angular relationship ensures that the flexible container 22 will be evenly filled and emptied without any stagnant areas.

## Claims

1. A flexible container assembly and magnetic separator combination comprising:
a magnetic separator (10) having two magnets fixed in a platform (12, 14), said platform being formed with two rectangular receptacles (16, 18) having two sets of opposing circumference sides and a bottom, with one of said two magnets being disposed in each of said rectangular receptacles, and wherein a first of said two magnets having a larger field reach with a lower field strength than a second of said two magnets;
a flexible container assembly including;
a first flexible container (20) having inlet and outlet ports, said first flexible container being configured for positioning in that said magnetic separator receptacle in which said first of said two magnets is disposed; and
a second flexible container (22) having an inlet and an outlet port, with said inlet port being coupled to an outlet port of said first flexible container, said second flexible container being configured for positioning in that said magnetic separator receptacle in which said second of said two magnets is disposed, said second flexible container being formed with two opposing sides which define therebetween a cross-sectional fluid flow of a distance of 0,5 to 1 mm (0.02 to 0.04 inch), and wherein said second flexible container is formed with walls adjacent said inlet port diverging away from said inlet port to provide an angle to the centerline of said inlet port of from about 35° to about 43°, and is formed with walls adjacent said outlet pot converging towards said outlet port to provide an angle to the centerline of said outlet port of from about 35° to about 43°.

## Patentansprüche

1. Kombination aus einer flexiblen Behälteranordnung und einer magnetischen Trenneinrichtung, wobei die Kombination folgendes aufweist:
eine magnetische Trenneinrichtung (10), die zwei Magnete hat, die in einer Plattform (12, 14) fixiert sind, wobei die Plattform mit zwei viereckigen Aufnahmen (16, 18) ausgebildet ist, die zwei Sets von gegenüberstehenden Umfangsseiten und einen Boden haben, wobei jeweils einer der beiden Magnete in jeder viereckigen Aufnahme angeordnet ist und wobei ein erster der beiden Magnete eine größere Feldreichweite mit einer geringeren Feldstärke als ein zweiter der beiden Magnete hat;
eine flexible Behälteranordnung, die aufweist:
einen ersten flexiblen Behälter (20), der Einlaß- und Auslaßöffnungen hat, wobei der erste flexible Behälter zur Positionierung in derjenigen Aufnahme der magnetischen Trenneinrichtung ausgebildet ist, in der der erste der beiden Magnete angeordnet ist; und
einen zweiten flexiblen Behälter (22), der eine Einlaß- und eine Auslaßöffnung hat, wobei die Einlaßöffnung mit einer Auslaßöffnung des ersten flexiblen Behälters verbunden ist, wobei der zweite flexible Behälter zur Positionierung in derjenigen Aufnahme der magnetischen Trenneinrichtung ausgebildet ist, in der der zweite der beiden Magnete angeordnet ist, wobei der zweite flexible Behälter mit zwei entgegengesetzten Seiten geformt ist, die zwischen sich einen Querschnitts-Fluiddurchfluß einer Strecke von 0,5 bis 1 mm (0,02 bis 0,04 inch) definieren, und wobei der zweite flexible Behälter benachbart der Einlaßöffnung mit Wänden ausgebildet ist, die von der Einlaßöffnung weg divergieren, um zu der Mittellinie der Einlaßöffnung einen Winkel von ca. 35° bis ca. 43° zu bilden, und angrenzend an die Auslaßöffnung mit Wänden ausgebildet ist, die zu der Auslaßöffnung hin konvergieren, um zu der Mittellinie der Auslaßöffnung einen Winkel von ca. 35° bis ca. 43° zu bilden.

## Revendications

1. Combinaison d'un ensemble de récipients flexibles et d'un séparateur magnétique comprenant :
un séparateur magnétique (10) ayant deux aimants fixés à une plate-forme (12, 14), ladite plate-forme comportant deux réceptacles rectangulaires (16, 18) ayant deux ensembles de faces périphériques opposées et un fond, l'un desdits deux aimants étant disposé dans chacun desdits réceptacles rectangulaires et dans lequel un premier desdits deux aimants a une portée de champ plus grande avec une intensité de champ plus faible que celle du deuxième desdits deux aimants;
un ensemble de récipients flexibles comprenant:
un premier récipient flexible (20) ayant des orifices d'entrée et de sortie, ledit premier récipient flexible étant configuré pour être placé dans ledit réceptacle du séparateur magnétique où ledit premier aimant est placé; et
un deuxième récipient flexible (22) ayant un orifice d'entrée et un orifice de sortie, ledit orifice d'entrée étant connecté à un orifice de sortie dudit premier récipient flexible, ledit deuxième récipient flexible étant configuré pour être placé dans ledit réceptacle du séparateur magnétique dans lequel est placé ledit deuxième aimant, ledit deuxième récipient flexible comportant deux faces opposées définissant entre elles un passage pour fluide d'une section transversale ayant une distance de 0,5 à 1 mm (0,02 à 0,04 pouce) et dans lequel ledit deuxième récipient flexible comporte des parois proches dudit orifice d'entrée, qui divergent en s'écartant dudit orifice d'entrée pour réaliser un angle, par rapport à la ligne d'axe dudit orifice d'entrée, compris entre environ 35° et environ 43° et qui comprend des parois proches dudit orifice de sortie, convergeant vers ledit orifice de sortie de manière à réaliser un angle, par rapport à la ligne d'axe dudit orifice de sortie, compris entre environ 35° et environ 43°.
